Europäisches Patentamt

European Patent Office

Office européen des brevets

(11) Veröffentlichungsnummer: **0 158 065**
**B1**

(12) **EUROPÄISCHE PATENTSCHRIFT**

(45) Veröffentlichungstag der Patentschrift:
15.11.89

(51) Int. Cl.⁴: **H 02 K 5/16, H 02 K 11/00**

(21) Anmeldenummer: 85101971.1

(22) Anmeldetag: 22.02.85

(54) **Handwerkzeugmaschine mit einem Elektromotor.**

(30) Priorität: 07.04.84 DE 3413233

(43) Veröffentlichungstag der Anmeldung:
16.10.85 Patentblatt 85/42

(45) Bekanntmachung des Hinweises auf die Patenterteilung:
15.11.89 Patentblatt 89/46

(84) Benannte Vertragsstaaten:
CH DE FR GB IT LI

(56) Entgegenhaltungen:
DE-A-2 746 502
DE-A-3 123 517
DE-A-3 147 418
DE-U-1 855 463
FR-A-2 425 761

PATENT ABSTRACTS OF JAPAN, Band 8, Nr. 119 (E-246) 1556, 5. Juni 1984; & JP - A - 59 32350 (MATSUSHITA DENKI SANGYO) 21.02.1984 (Kat. X)

(73) Patentinhaber: ROBERT BOSCH GMBH, Postfach 50, D-7000 Stuttgart 1 (DE)

(72) Erfinder: Kränzler, Ernst, Oberlinstrasse 14, D-7022 Leinfelden- Echterdingen (DE)

## Beschreibung

### Stand der Technik

Die Erfindung geht aus von einer Handverkzeugmaschine nach der Gattung des Hauptanspruchs. Solche Handwerkzeugmaschinen sind bekannt mit Gehauseschalen, die zugleich zwei Lagerschalenhälften aufnehmen bzw. als solche ausgebildet sind. In diese Gehauseschalen sind auch elektrotechnische Bauelemente wie Bürstenhalter, Drosseln zur Funkenlöschung und Entstörung, Anzeigelämpchen oder dgl. eingesetzt. Daraus ergibt sich eine Form für die Gehauseschalen, die spritztechnisch schwer beherrschbar bzw. sehr aufwendig ist. Die Motorlager werden erst durch das Zusammenfügen der Gehäuseschalen komplett, weshalb der Motor nur bei geschlossenem Gehause in Betrieb gesetzt werden kann. Das erschwert die Fehlerbestimmung, weil ein Sichtkontakt zu Motorlagern und den elektrischen Bauelementen nicht Wärend des Motorbetriebs möglich ist. Die Verkabelung der getrennt gelagerten elektrotechnischen Bauelemente muß nach dem Einbau in die Gehäuseschalen erfolgen. Das ist zeitraubend und erfordert besondere Fertigkeiten, was die Werkzeugmaschine verteuert. Außerdem ist das dadurch entstehende Kabelgewirr unübersichlich. Herstellungsfehler sind schwer erkennbar, was möglicherweise auch die Ausschußquote erhöht. Die zur sicheren Lagerung notwendigen Verschraubungen in Lagernähe erfordern Schraubenlöcher im Handgriffbereich einer solchen Handwerkzeugmaschine, die beim Gebrauch stören.

### Vorteile der Erfindung

Die erfindungsgemäße Handwerkzeugmaschine mit den kennzeichnenden Merkmalen des Hauptanspruchs hat demgegenüber den Vorteil, daß eine kompakte Baugruppe "Lagerbrücke" außerhalb der Gehauseschalen montiert werden kann. Aus dem erfindungsgemaßen Aufbau ergeben sich auch kurze elektrische Leitungswege, die die Reaktionszeit der Funkenlöschung verkürzen und das störende Abstrahlen elektromagnetischer Wellen weitgehend verhindern. Zudem sind die am Stand der Technik bemängelten Nachteile bei der Störungssuche beseitigt, die spritztechnische Ausführung der Gehäuseschalen vereinfacht und die Handwerkzeugmaschine griffreundlicher gestaltet, weil Gas Verschrauben der Gehäuseschalen im Handgriffbereich entfallen kann.

Aus der DE-A- 3 147 418 ist zwar ein Elektrowerkzeug zu entnehmen in dem eine Lagerbrücke eine vormontierbare Bangruppe bildet, jedoch ist diese Lagerbrücke so aufgebaut, daß sie das bürstenseitige Lager geschlossen umgibt, und daß sie schon vor dem Einlegen in das Gehäuse mit dem Motorzusammengebant ist.

Demgegenüber kann bei der erfindungsgemässen Handwerkzeugmaschine das Wellenende bei der Befestigung der Lagerbrücke auf den Lagerbock genan festgelegt werden.

Durch die in den Unteransprüchen aufgeführten Maßnahmen sind vorteilhafte Weiterbildungen und Verbesserungen der im Hauptanspruch angegebenen Randwerkzeugmaschine möglich. Besonders vorteilhaft ist die Aufnahme auch eines induktiven Abnehmers einer Drehzahlregeleinrichtung und/oder einer Anzeigevorrichtung für die elektrische Drehzahlumschaltung in die Lagerbrücke-Baugruppe.

### Zeichnung

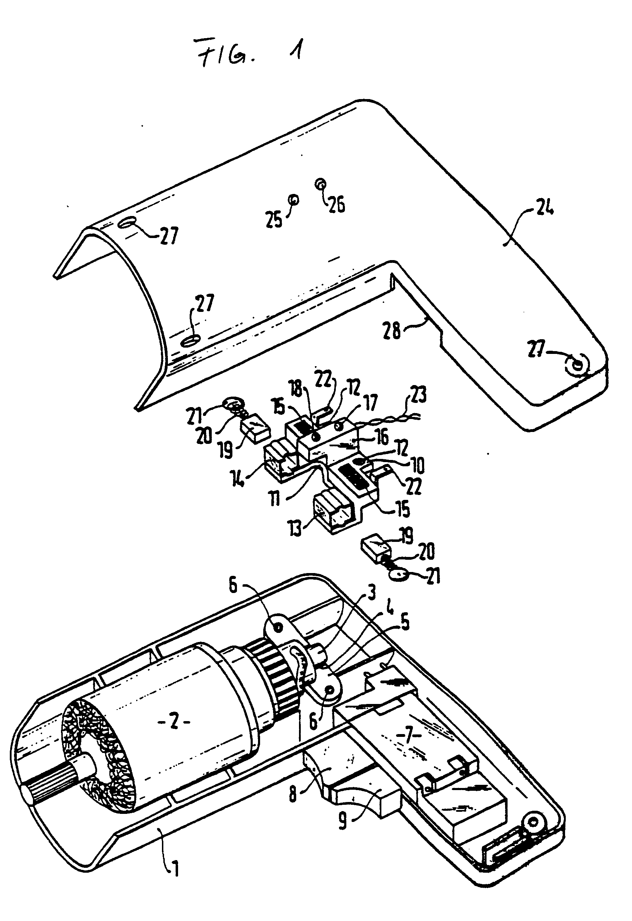

Ein Ausführungsbeispiel des Erfindungsgegenstandes ist in der Zeichnung dargestellt und in der nachfolgenden Beschreibung näher erläutert. Die Figur zeigt eine perspektivische Darstellung des Motor- und Griffteils der erfindungsgemäßen Handwerkzeugmaschine, auseinandergezogen in Einzelgruppen, von denen die erste eine Gehäuseschale mit einem eingelegten Motor und Schalterteilen, die zweite die Lagerbrücken-Baugruppe und die dritte die zweite Gehäuseschale zeigen.

### Beschreibung des Ausführungsbeispiels

In einer ersten Gehäuseschale 1 lagert ein Motor 2 mit seinem bürstenseitigen Wellenende 3 in einer Halbschale 4 eines Lagerbockes 5. Dieser Lagerbock 5 ist mit Gewindelöchern 6 versehen. Im Griffbereich dieser Gehäseschale 1 ist ein Doppelschalter 7 mit zwei Schalthandhaben 8 und 9 befestigt. An diesem Doppelschalter 7 ist ein hier nicht dargestelltes elektrisches Versorgungskabel angeschlossen Dieses Versorgungskabel ist in der üblichen Weise von der Unterseite des Handgriffteils her in das Handverkzeugmaschinengehäuse eingeführt. Eine Lagerbrücke 10 mit einer Halbschale 11 bildet, zusammen mit dem Lagerbock 5, das Lager für das Wellenende 3 des Motors 2. Zum Aufschrauben auf den Lagerbock 5 sind in die Lagerbrücke 10 zwei Durchgangslöcher 12 eingebrach. Zwei Kohlebürstenhalter 13 und 14 sind an der Lagerbrücke 10 befestig. Die Lagerbrücke 10 trägt weiter auch zwei Drosseln 15, und einen induktiven Abnehmer 16, mit zwei Leuchtdioden 17 und 18. Zwei Kohlebürsten 19 mit Andruckfedern 20 und Halteplatten 21 sind in die Kohlebürstenhalter 13 bzw. 14 einsetzbar. Steckkontakte 22 an der Lagerbrücke 10 dienen dem Anschluß der Kohlebürsten 19 über die Drosseln 15 an den Doppelschalter 7. Die hierzu erforderlichen Leitungsverbindungen sind wie üblich ausgeführt und hier nicht naher dargestellt. Anschlußdrähte 23 des Abnehmers 16 führen zu einer hier ebenfalls nicht naher ausgeführten Auswerteschaltung. Eine zweite Gehäuseschale 24 besitzt durchsichtig abgedeckte Sichtöffnungen 25 und 26 zum Beobachten der Leuchtdioden 17 bzw. 18. Außerdem weist diese Gehäuseschale 24 Durchgangsbohrungen 27 mit Einsenkungen auf, durch die Schrauben zum Zusammenschrauben der Gehäuseschalen 1 und 24 hindurchgeführt werden können. Eine Aussparung 28 umschließt, im montierten Zustand der Handwerkzeugmaschine, Teile der Schalthandhaben 8 und 9.

Die Lagerbrücken-Baugruppe, bestehend aus der Lagerbrücke 10, der Halbschale 11, den Kohlenbürstenhaltern 13 und 14, den Drosseln 15 und dem Abnehmer 16 mit den Leuchtdioden 17 und 18, kann als selbständige Baugruppe vormontiert und außerhalb des Gehäuses geprüft werden. Mit dem Aufschrauben der Lagerbrücke 10 auf den Lagerbock 5 wird das Wellenende 3 in einem Lager mit den Halbschalen 4 und 11 drehbar festgelegt. Damit sind zugleich die Kohlebürsten 19, die ihnen vorgeschalteten Drosseln 15 und der Abnehmer 16 mit den Leuchtdioden 17 und 18 in ihre Wirkstellung überführt. Zum Ersatz eines dieser Bauelemente kann diese Lagerbrücken-Baugruppe ebenso einfach dem Gehäuse der Handwerkzeugmaschine entnommen werden. Die Leuchtdioden 17 und 18 zeigen an, welche der beiden wählbaren Drehzahlstufen des Motors 2 mittels einer der Schalthandhaben 8 bzw. 9 eingeschaltet ist. Die Gehäuseschale 24 hat lediglich eine Abdeckfunktion und wird deshalb für den Betrieb des Motors 2, nicht benötigt. Ist diese Gehäuseschale 24 abgenommen, kann deshalb die Funktion des Motors 2, der Kohlebürsten 19, des Lagers 5/10 und der Leuchtdioden 17 und 18 durch Sichtkontrolle überprüft werden. Es kann dabei auch geprüft werden, ob die elektrischen Verbindungen einwandfrei hergestellt sind.

## Patentansprüche

3. Handwerkzeugmaschine nach einem der Ansprüche 1 oder 2, dadurch gekennzeichnet, daß die Lagerbrücke (10) einen induktiven Abnehmer (16) für eine Drehzahlregeleinrichtung trägt bzw. aufnimmt.

4. Handwerkzeugmaschine nach einem der Ansprüche 1 bis 3, dadurch gekennzeichnet, daß die Lagerbrücke (10) Leuchtdioden (17, 18) trägt, z. B. zur Anzeige einer elektrisch umschaltbaren Spindeldrehzahl des Antriebsmotors (2).

## Patentansprüche

1. Handverkzeugmaschine mit einem Elektromotor (2) und einem die Motorlagerung aufnehmenden, aus Gehäuseschalen (1, 24) gebildeten Gehäuse und mit einem bürstenseitigen Motorlager, das einen mit einer Gehäuseschale (1) verbundenen Lagerbock (5) aufweist, dadurch gekennzeichnet, daß das Motorlager (5, 10) eine vom Gehäuse getrennte Lagerbrücke umfaßt, die zugleich als Träger für elektrotechnische Bauelemente dient und daß dabei die Lagerbrücke (10), die Bürstenhalter (13, 14) und die Bürsten (19) eine vormontierbare Baugruppe bilden, derart, daß mit der Befestigung der Lagerbrücke (10) auf dem Lagerbock (5) die Bürsten (19) in ihre Wirkstellung überführt werden.

2. Handwerzeugmaschine nach Anspruch 1, dadurch gekennzeichnet, daß die Lagerbrücke (10) die obere Lagerschale (11) und Drosseln (15) zur Funkentstörung und Funkenlöschung trägt bzw. aufnimmt.

5. Handwerkzeugmaschine nach einem der Ansprüche 1 bis 4, dadurch gekennzeichnet, daß die Lagerbrücke (10) Teile (22) von Steckkontakten trägt.

6. Handwerkzeugmaschine nach Anspruch 2, dadurch gekennzeichnet, daß die Kohlebürsten (19) und die Drosseln (15) schaltungstechnisch unmittelbar miteinander verbunden sind.

## Claims

1. Hand machine tool having an electric motor (2) and a housing formed by housing shells (1, 24) receiving the motor bearings and having a brush side motor bearing which exhibits a bearing block (5) connected to a housing shell (1), characterized in that the motor bearing (5, 10) comprises a bearing bridge separate from the housing, which serves simultaneously as a carrier for electrotechnical components and that at the same time the bearing bridge (10), the brush holders (13, 14) and the brushes (19) form a preassemblable subassembly, so that the brushes (19) are transferred into their operative position by the fastening of the bearing bridge (10) upon the bearing block (5).

2. Hand machine tool according to Claim 1, characterized in that the bearing bridge (10) carries or contains the upper bearing shell (11) and chokes (15) for radio suppression and spark extinguishing.

3. Hand machine tool according to either Claim 1 or 2, characterized in that the bearing bridge (10) carries or contains an inductive collector (16) for a speed control device.

4. Hand machine tool according to one of Claims 1 to 3, characterized in that the bearing bridge (10) carries light emitting diodes (17, 18), for indicating an electrically switchable spindle speed of the drive motor (2), for example.

5. Hand machine tool according to one of Claims 1 to 4, characterized in that the bearing bridge (10) carries parts (22) of plug-in contacts.

6. Hand machine tool according to Claim 2, characterized in that the carbon brushes (19) and the chokes (15) are connected directly to each other in circuit arrangement.

**Revendications**

1. Outillage à main comportant un moteur électrique (2) et un carter formé de coques de carter (1, 24) recevant le support du moteur, et un palier de moteur du côté des balais, qui présente un palier (5) lié à une coque de carter (1), caractérisé en ce que le palier de moteur (5, 10) comprend une console terminale séparée du carter qui sert en même temps de support aux composants électriques, et en ce qu'en outre, la console terninale (10), les porte-balais (13, 14) et les balais (19) forment un ensemble prémontable, de telle sorte que, par la fixation de la console terminale (10) sur le palier (5), les balais sont mis dans leur position de fonctionnement.

2. Outillage à main selon la revendication 1, caractérisé en ce que la console terminale (10) porte ou reçoit la coquille de palier (11) et les bobines (15) pare-étincelles ou anti-parasite.

3. Outillage à main selon l'une des revendications 1 ou 2, caractérisé en ce que la console terminale (10) porte ou reçoit un récepteur inductif pour un compteur de vitesse de rotation.

4. Outillage à main selon l'une des revendications 1 à 3, caractérisé en ce que la console terminale (10) porte des diodes électro-luminescentes (17, 18) par exemple pour l'affichage d'une vitesse de rotation modifiable électriquement de la broche du moteur d'entraînement (2).

5. Outillage à main selon l'une des revendications 1 à 4, caractérisé en ce que la console terminale (10) porte des éléments (22) de contact enfichables.

6. Outillage à main selon la revendication 2, caractérisé en ce que les balais de charbon (19) et les bobines (15) sont reliés entre eux directement par des techniques de connexion.

FIG. 1